(19) Europäisches Patentamt
European Patent Office
Office européen des brevets

(11) EP 4 800 813 A1

(12) # EUROPEAN PATENT APPLICATION
published in accordance with Art. 153(4) EPC

(43) Date of publication:
**02.09.2026 Bulletin 2026/36**

(21) Application number: **24882865.9**

(22) Date of filing: **24.10.2024**

(51) International Patent Classification (IPC):
***H01M 50/133*** *(2021.01)* ***H01M 50/126*** *(2021.01)*
***H01M 50/119*** *(2021.01)* ***H01M 50/121*** *(2021.01)*
***H01M 50/105*** *(2021.01)* ***H01M 10/052*** *(2010.01)*
***B32B 15/085*** *(2006.01)* ***B32B 15/088*** *(2006.01)*
***B32B 15/09*** *(2006.01)* ***B32B 27/08*** *(2006.01)*

(52) Cooperative Patent Classification (CPC):
**B32B 15/085; B32B 15/088; B32B 15/09; B32B 27/08; H01M 10/052; H01M 50/105; H01M 50/119; H01M 50/121; H01M 50/126; H01M 50/133;** Y02E 60/10

(86) International application number:
**PCT/KR2024/016319**

(87) International publication number:
**WO 2025/089838 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.10.2023 KR 20230143316**

(71) Applicant: **Youlchon Chemical Co., Ltd.**
**Seoul 07057 (KR)**

(72) Inventors:
- **SONG, Nok Jung**
  **Seoul 07057 (KR)**
- **HAN, Hee Sik**
  **Ansan-si, Gyeonggi-do 15430 (KR)**
- **KIM, Hui Hun**
  **Ansan-si, Gyeonggi-do 15430 (KR)**
- **KIM, Jin Ho**
  **Ansan-si, Gyeonggi-do 15430 (KR)**
- **JUNG, Jong Hyuk**
  **Ansan-si, Gyeonggi-do 15430 (KR)**
- **SHIN, Sung Chul**
  **Ansan-si, Gyeonggi-do 15430 (KR)**
- **SONG, Moon Kyu**
  **Ansan-si, Gyeonggi-do 15430 (KR)**

(74) Representative: **Meissner Bolte Partnerschaft mbB**
**Patentanwälte Rechtsanwälte**
**Postfach 86 06 24**
**81633 München (DE)**

(54) **POUCH FILM, POUCH-TYPE BATTERY CASE AND SECONDARY BATTERY COMPRISING SAME, AND METHOD FOR MANUFACTURING SAME**

(57) The present invention relates to a pouch film comprising a sealant layer, a barrier layer, a second outer layer, and a first outer layer which are sequentially laminated, wherein the second outer layer comprises a nylon-based resin, the thickness of the second outer layer is 35-60 μm inclusive, and the tensile strength ratio of the barrier layer and the second outer layer measured according to the measuring condition below is 0.9-1.2 inclusive. [Measuring condition] The barrier layer and the second outer layer of the pouch film are peeled so as to make respective test pieces having a width of 15 mm, and then, at room temperature, the test pieces are fixed between two jigs of a tensile tester (UTM) (initial jig gap 50 mm), and then the stroke (mm) and strength (N) of the test pieces are measured while pulling each test piece in the MD direction at a measuring speed of 50 mm/min. The x-axis in a graph derived from the measured values is stroke (mm), and the y-axis is tensile strength (N), and the tensile strength of the barrier layer and the second outer LAYER when the stroke is 5 mm is measured.

EP 4 800 813 A1

【Figure 1】

| FIRST OUTER LAYER (PET) |
|---|
| SECOND OUTER LAYER (NY) |
| BARRIER LAYER (AL) |
| SEALANT LAYER (EC LAYER) |
| SEALANT LAYER (CPP LAYER) |

## Description

[Technical Field]

CROSS-REFERENCE TO RELATED APPLICATIONS

This application claims priority under 35 U.S.C. § 119 to Korean Patent Application No. 10-2023-0143316 filed on October 24, 2023, in the Korean Intellectual Property Office, the disclosures of which are incorporated by reference herein in their entireties.

Technical field

The present disclosure relates to a secondary battery pouch film, a pouch-type battery case and a secondary battery including the same, and a method of manufacturing the same.

[Background Art]

Types of a secondary battery include a nickel cadmium battery, a nickel hydrogen battery, a lithium ion battery, and a lithium ion polymer battery. This secondary battery is applied and used not only in small products such as digital cameras, P-DVDs, MP3Ps, mobile phones, PDAs, portable game devices, power tools, and e-bikes, but also in large products requiring high output such as electric vehicles and hybrid vehicles, as well as in power storage devices and backup power storage devices for storing surplus generated power or renewable energy.

To manufacture this secondary battery, first, an electrode active material slurry is applied to a positive electrode current collector and a negative electrode current collector to manufacture a positive electrode and a negative electrode, and the positive electrode and the negative electrode are laminated on both sides of a separator to form an electrode assembly having a predetermined shape. Further, the electrode assembly is accommodated in a battery case, and after an electrolyte is injected, sealing is performed.

The secondary battery may be classified into a pouch type, a cylindrical type, and a prismatic type according to a type of an exterior material of a case accommodating the electrode assembly.

Among these secondary batteries, the pouch-type battery has a form in which the electrode assembly (cell) is embedded in a pouch of a metal laminate sheet, the pouch-type battery is easily manufactured and has low manufacturing costs, and in particular, a large-capacity battery pack is easily manufactured by connecting a plurality of unit cells in series or in parallel. Thus, the pouch-type battery is mainly utilized in fields requiring large-capacity secondary batteries such as electric vehicles. A pouch, which is a case of the pouch-type secondary battery, is manufactured by performing press processing on a pouch film having flexibility to form a cup portion. Further, when the cup portion is formed, the electrode assembly is accommodated in an accommodating space of the cup portion, a sealing portion is sealed, and thus the secondary battery is manufactured. Herein, the cup portion refers to a portion accommodating the electrode assembly, and the sealing portion refers to an edge portion of the cup portion at which the pouch film is sealed.

Meanwhile, in the case of the secondary battery having high energy density using the pouch film, a method of increasing formability to insert an active material into single packaging as much as possible is the most ideal method. The secondary battery using the pouch film requires a method of improving formability of the pouch film to insert a battery active material into the pouch as much as possible in order to increase energy density, and for this purpose, the pouch film needs to secure higher formability. However, in a current pouch film, when high formability is exhibited, a remaining thickness of a barrier layer is reduced due to stretching during forming, and therefore, moisture penetration and electrolyte leakage may occur, and thus stability is not ensured.

A currently commercialized pouch film is a 183 μm product and includes PP80/Al60/Nylon25/PET12, the high-formability pouch only secures formability of about 12 mm to 15 mm, and since a remaining thickness of Al after the forming is thin at about 30 μm, it is difficult to completely protect battery materials sensitive to air and moisture. Accordingly, research is conducted to secure high formability and a remaining thickness of a barrier layer Al after the forming.

[Disclosure]

[Technical Problem]

A problem to be solved by the present disclosure is to provide a pouch film having high formability, a pouch-type battery case including the same, a secondary battery, and a method of manufacturing the same.

[Technical Solution]

The present disclosure provides a pouch film, a pouch-type battery case including the same, a secondary battery, and a method of manufacturing the same.

(1) The present disclosure provides a pouch film including a sealant layer, a barrier layer, a second outer layer, and a first outer layer sequentially laminated, wherein the second outer layer includes a nylon-based resin, a thickness of the second outer layer is in a range of 35 $\mu$m to 60 $\mu$m, and a ratio of a tensile strength of the barrier layer to a tensile strength of the second outer layer, which is measured according to a measurement condition, satisfies the following Equation 1. [14]

[Equation 1] $0.9 \leq$ Tensile strength of barrier layer/Tensile strength of second outer layer $\leq 1.2$ [Equation 1]

[16] [Measurement condition]

After the barrier layer and the second outer layer of the pouch film are peeled off to prepare a specimen having a width of 15 mm, the specimen is fixed between two jigs of a tensile tester UTM at room temperature (with an initial jig gap of 50 mm), and then while the specimen is pulled in an MD direction at a measurement speed of 50 mm/min, a stroke (mm) and a strength (N) of the specimen are measured. In a graph derived from the measured values, an X axis is a stroke (mm), a Y axis is a tensile strength(N), and tensile strengths of the barrier layer and the second outer layer are measured when the stroke is 5 mm.

(2) The present disclosure provides the pouch film of (1), wherein a ratio of a thickness of the barrier layer to a thickness of the second outer layer may be in a range of 1:0.5 to 1:07.
(3) The present disclosure provides the pouch film of (1) or (2), wherein a thickness of the barrier layer may be in a range of 40 $\mu$m to 100 $\mu$m.
(4) The present disclosure provides the pouch film of any one of (1) to (3), wherein a sum of a thickness of the first outer layer and a thickness of the second outer layer may be in a range of 40 $\mu$m to 100 $\mu$m.
(5) The present disclosure provides the pouch film of any one of (1) to (4), wherein a ratio of a thickness of the barrier layer to a sum of a thickness of the first outer layer and a thickness of the second outer layer may be in a range of 1:0.65 to 1:0.9.
(6) The present disclosure provides the pouch film of any one of (1) to (5), wherein MD elongation and TD elongation of the second outer layer may be in a range of 50% to 300% independently of each other.
(7) The present disclosure provides the pouch film of any one of (1) to (6), wherein a tensile strength of the second outer layer in an MD direction may be in a range of 200 N/15 mm to 300 N/15 mm.
(8) The present disclosure provides the pouch film of any one of (1) to (7), wherein a thickness retention ratio of the barrier layer according to Equation 2 may be 55% or more. [25]

[Equation 2] Thickness retention ratio (%) = (thickness of the barrier layer after forming/thickness of the barrier layer before forming) $\times$ 100 [Equation 2]

In Equation 2,
The thickness of the barrier layer after forming is measured after cutting the pouch film not including a sealing portion, preparing a specimen having a dimension of 266 mm (TD) $\times$ 240 mm (MD) $\times$ 15 mm (width), adding low-density polyethylene (LDPE) onto both sides of the specimen, pressing the specimen at 0.3 MPa using a test mold having a dimension of 30 mm $\times$ 75 mm, and then forming the specimen to a forming depth of 17 mm. In this case, an average value of the thickness of the barrier layer is calculated by measuring each of four corners of a rectangular formed shape six times.
(9) The present disclosure provides the pouch film of any one of (1) to (8), wherein the second outer layer may include a single layer or two or more laminated layers.
(10) The present disclosure provides the pouch film of any one of (1) to (9), wherein a thickness of the pouch film may be in a range of 205 $\mu$m to 250 $\mu$m.
(11) The present disclosure provides the pouch film of any one of (1) to (10), wherein the first outer layer may include one or more materials selected from the group consisting of polyethylene, polypropylene, polycarbonate, polyethylene terephthalate, polybutylene terephthalate, polytrimethylene terephthalate, polyethylene naphthalate, polyvinyl chloride, an acryl-based polymer, polyacrylonitrile, polyimide, polyamide, cellulose, aramid, nylon, polyester, polyparaphenylene benzobisoxazole, polyarylate, Teflon, and glass fiber.
(12) The present disclosure provides the pouch film of any one of (1) to (11), wherein a thickness of the first outer layer

may be in a range of 5 μm to 40 μm.

(13) The present disclosure provides the pouch film of any one of (1) to (11), wherein the barrier layer may include one or more materials selected from the group consisting of aluminum, stainless steel, copper, titanium, and alloys thereof.

(14) The present disclosure provides a pouch-type battery case including the pouch film of any one of (1) to (13).

(15) The present disclosure provides a secondary battery including an electrode assembly in which a positive electrode, a separator, and a negative electrode are laminated and formed and the pouch-type battery case of claim 14, in which the electrode assembly is accommodated.

(16) The present disclosure provides a method of manufacturing a pouch film, the method including laminating a sealant film on one surface of a barrier film and sequentially laminating a second outer layer and a first outer layer on the other surface of the barrier film, wherein the second outer layer includes a nylon-based resin, and the second outer layer is manufactured by a blown method.

[Advantageous Effects]

A pouch film of the present disclosure may have excellent tensile strength and excellent elongation and thus may have high formability characteristics.

Further, the pouch film of the present disclosure may have an excellent thickness retention ratio of a barrier layer after forming, thereby preventing moisture penetration and electrolyte leakage.

Further, the pouch film of the present disclosure may accommodate a large amount of an electrode assembly due to high formability and thus may have high electrical capacity and efficiency.

[Description of Drawings]

FIG. 1 is a schematic view illustrating a configuration of a pouch film according to the present disclosure.

FIG. 2 is a graph illustrating a tensile strength (N) compared to a stroke (mm) of a barrier layer and a second outer layer.

FIG. 3 is an SEM image illustrating a remaining thickness of the barrier layer after forming according to example 1.

FIG. 4 is an SEM image illustrating a remaining thickness of the barrier layer after forming according to comparative example 2.

[ Mode for Invention]

Hereinafter, the present disclosure will be described in more detail to help understanding of the present disclosure. In this case, terms or words used in the specification and the appended claims should not be interpreted as being limited to usual or dictionary meanings and should be interpreted as meanings and concepts corresponding to the technical spirit of the present disclosure according to the principle that the inventor may properly define the concepts of the terms in order to describe his/her own disclosure in the best way.

Terms used herein are used to merely describe illustrative embodiments and are not intended to limit the present disclosure. Singular expressions include plural expressions unless clearly otherwise indicated in the context.

It should be understood in the specification that terms such as "include," "provided with," and "have" are intended to indicate that features, numbers, steps, components, or combinations thereof are present and do not exclude in advance the possibility of the presence or addition of one or more other features, numbers, steps, components, or combinations thereof.

In the present disclosure, when a secondary battery pouch includes each layer, the secondary battery pouch may not necessarily include only the corresponding layer but include an additional layer.

In the present disclosure, the wording "formed "on" a specific layer" includes not only a case "formed directly on the corresponding layer" but also a case "formed after an additional other layer is interposed."

In the specification, an extrusion coating (EC) layer refers to an extrusion layer of a resin, e.g., a polyolefin-based resin, preferably, a polypropylene-based resin, which is extruded for lamination with a barrier layer as a portion or an entire layer of a sealant layer. When unstretched polypropylene CPP and the EC layer are simultaneously present in the sealant layer, the EC layer is positioned on a barrier layer side.

In the present disclosure, a polypropylene (PP) layer of the sealant layer may serve as a core resin layer constituting the sealant layer, may perform a sealing role, and may include one or more layers made of a polypropylene-based resin. As compared to the EC layer for lamination with the barrier layer, the PP layer is positioned on an inner side of the pouch film (i.e., an opposite side to the barrier layer) based on the EC layer.

**Pouch Film**

The present disclosure provides a pouch film including a sealant layer, a barrier layer, a second outer layer, and a first outer layer sequentially laminated, wherein the second outer layer includes a nylon-based resin, a thickness of the second outer layer is in a range of 35 μm to 60 μm, and a ratio of a tensile strength of the barrier layer to a tensile strength of the second outer layer, which is measured according to a measurement condition, satisfies the following Equation 1.

$$0.9 \leq \text{Tensile strength of barrier layer/Tensile strength of second outer layer} \leq 1.2 \qquad \text{[Equation 1]}$$

[Measurement condition]

After the barrier layer and the second outer layer of the pouch film are peeled off to prepare a specimen having a width of 15 mm, the specimen is fixed between two jigs of the tensile tester UTM at room temperature (with an initial jig gap of 50 mm), and then while the specimen is pulled in an MD direction at a measurement speed of 50 mm/min, a stroke (mm) and a strength (N) of the specimen are measured. In a graph derived from the measured values, an X axis is a stroke (mm), a Y axis is a tensile strength(N), and tensile strengths of the barrier layer and the second outer layer are measured when the stroke is 5 mm.

An outer layer included in the pouch film serves to block contact with the outside and seal an electrode assembly accommodated therein, and thus is required to have an excellent processability and formability, and the processability and formability are affected by mechanical properties, and in particular, are greatly affected by mechanical properties of the outer layer. An inventor of the present disclosure finds that, in the case of a pouch film according to the related art, a forming process is performed according to a size of the electrode assembly to accommodate the electrode assembly having a desired size, but a remaining thickness of the barrier layer (metal layer) is reduced due to stretching during forming, and therefore, moisture penetration and electrolyte leakage may occur.

In order to solve these problems, the inventor provides a pouch film having high formability by specifying a thickness of the second outer layer including a nylon-based resin, controlling the tensile strength ratio between the barrier layer and the second outer layer within a specific range, simultaneously maintaining an excellent tensile strength and an excellent elongation, increasing a thickness retention ratio after forming, and preventing moisture penetration and electrolyte leakage.

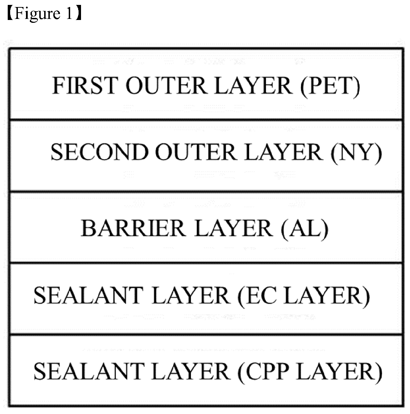

FIG. 1 illustrates a configuration of a pouch film according to the present disclosure. The pouch film of the present disclosure includes the sealant layer on an inner side thereof, the outer layer, and the barrier layer including aluminum between the inner sealant layer and the outer layer. Further, the outer layer includes the first outer layer and the second outer layer. In detail, the outer layer may be formed of a laminated film of the first outer layer and the second outer layer. The second outer layer may include a heat-resistant resin having a melting point higher than a thermal bonding temperature of the sealant layer, and the second outer layer may include a nylon-based resin.

Further, the outer layer may be an outermost layer of the pouch film for a lithium secondary battery exterior, and a thickness of the outer layer may be specified within a range capable of securing sufficient mechanical strength and sufficient formability as an exterior material. In particular, the second outer layer of the outer layer of the present disclosure may have a greater thickness than that of a second outer layer according to the related art in further consideration of the thickness retention ratio of the barrier layer.

The thickness of the second outer layer of the present disclosure is in a range of 35 μm to 60 μm. By way of example, the thickness of the second outer layer may be 35 μm or more, 37 μm or more, 39 μm or more, 40 μm or more, 43 μm or more, 45 μm or more, 47 μm or more, 50 μm or more, 60 μm or less, 59 μm or less, 57 μm or less, 55 μm or less, 53 μm or less, and 51 μm or less. In detail, the thickness of the second outer layer may be in a range of 40 μm to 55 μm. When the thickness of the second outer layer deviates from the thickness range, a tensile strength may be lowered, and formability of the pouch film may be degraded.

Further, the second outer layer may include a single layer or two or more laminated layers. To increase the thickness of the second outer layer and achieve balance of physical properties with the barrier layer, the second outer layer may be formed as a single layer or may be formed by laminating two or more separate layers.

Further, in the pouch film of the present disclosure, the tensile strength ratio of the barrier layer to the second outer layer according to Equation 1 is in a range of 0.9 to 1.2. By way of example, a tensile strength of the barrier layer/tensile strength of the second outer layer according to Equation 1 is 0.90 or more, 0.91 or more, 0.93 or more, 0.95 or more, 0.97 or more, 1.00 or more, 1.01 or more, 1.03 or more, 1.05 or more, 1.07 or more, 1.09 or more, 1.20 or less, 1.19 or less, 1.17 or less, 1.15 or less, 1.13 or less, 1.11 or less, or 1.10 or less, and in detail, the value is in a range of 0.95 to 1.17. The tensile strength and elongation of the barrier layer and the outer layer are one of main properties that may be associated with formability of the pouch film. For example, when the tensile strength is increased, toughness may be increased, and when the elongation is increased, a limit of the formability may be increased.

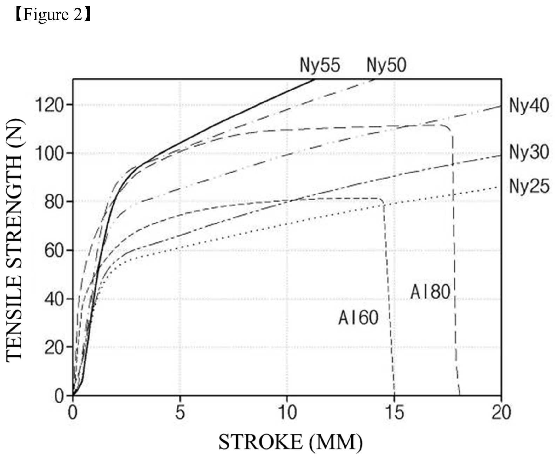

FIG. 2 is a graph illustrating the tensile strengths of the barrier layer and the outer layer. In FIG. 2, a dotted line is a

tensile strength curve of the barrier layer Al having a thickness of 60 μm and 80 μm, and a solid line is a tensile strength curve of the second outer layer Ny according to each thickness. When the tensile strength of the second outer layer compared to the tensile strength of the barrier layer is too low, the formability is significantly degraded. Accordingly, by increasing the thickness of the second outer layer, the tensile strength ratio of the barrier layer to the second outer layer is controlled to be close to 1.

That is, the pouch film of the present disclosure is controlled to simultaneously satisfy the thickness range of the second outer layer and the tensile strength ratio of the barrier layer to the second outer layer, thereby simultaneously achieving an optimum tensile strength and elongation characteristics. Therefore, the present disclosure may provide the pouch film having excellent formability, which may increase the thickness retention ratio of the barrier layer and may be finely and accurately formed in a desired size.

According to the embodiment of the present disclosure, the thickness of the first outer layer may be in a range of 5 μm to 40 μm. As the thickness of the first outer layer becomes thinner and the thickness of the second outer layer becomes thicker, the formability becomes more advantageous. However, as the thickness of the first outer layer becomes thinner, an insulation breakdown voltage may be more disadvantageous. From this perspective, the thickness of the first outer layer may be 5 μm or more, 8 μm or more, 10 μm or more, 12 μm or more, 40 μm or less, 39 μm or less, 37 μm or less, 35 μm or less, 33 μm or less, 31 μm or less, 30 μm or less, 29 μm or less, 27 μm or less, 25 μm or less, 23 μm or less, 21 μm or less, 20 μm or less, 19 μm or less, 17 μm or less, 15 μm or less, or 13 μm or less.

According to the embodiment of the present disclosure, the thickness of the barrier layer may be in a range of 40 μm to 100 μm. The barrier layer may be an intermediate layer (layer disposed between the outer layer and the sealant layer) of the pouch film for a lithium secondary battery exterior and may serve to block intrusion of gas and/or moisture.

A type of the barrier layer is not particularly limited, but the barrier layer may include one or more materials selected from the group consisting of aluminum, stainless steel, copper, titanium, and alloys thereof and may include aluminum in detail.

Further, by way of example, the thickness of the barrier layer may be 40 μm or more, 42 μm or more, 44 μm or more, 46μm or more, 48 μm or more, 50 μm or more, 52 μm or more, 54 μm or more, 56 μm or more, 58 μm or more, 60 μm or more, 62 μm or more, 64 μm or more, 66 μm or more, 68 μm or more, 70 μm or more, 72 μm or more, 74 μm or more, 75 μm or more, 100 μm or less, 99 μm or less, 98 μm or less, 96 μm or less, 94 μm or less, 92 μm or less, 90 μm or less, 88 μm or less, 86 μm or less, 84 μm or less, 82 μm or less, 80 μm or less, 78 μm or less, or 76 μm or less, and may be in a range of 70 μm to 90 μm in detail. When the thickness range of the barrier layer is satisfied, the intrusion of gas and/or moisture may be effectively blocked, and at the same time, the tensile strength ratio with the second outer layer may be maintained within a specific range, and therefore, excellent formability may be secured.

According to the embodiment of the present disclosure, a ratio of a thickness of the barrier layer to a thickness of the second outer layer may be in a range of 1:0.5 to 1:0.7. By way of example, the thickness ratio of the barrier layer to the second outer layer may be 1:0.50 or more, 1:0.51 or more, 1:0.53 or more, 1:0.55 or more, 1:0.57 or more, 1:0.59 or more, 1:0.60 or more, 1:0.61 or more, 1:0.63 or more, 1:0.70 or less, 1:0.69 or less, 1:0.67 or less, or 1:0.65 or less, and in detail, the thickness ratio of the barrier layer to the second outer layer may be in a range of 1:0.5 to 1:0.69.

Further, according to the embodiment of the present disclosure, a sum of the thicknesses of the first outer layer and the second outer layer may be in a range of 50 μm to 80 μm. By way of example, the sum of the thicknesses of the first outer layer and the second outer layer may be 50 μm or more, 52 μm or more, 55 μm or more, 57 μm or more, 60 μm or more, 62 μm or more, 80 μm or less, 78 μm or less, 76 μm or less, 74 μm or less, 72 μm or less, 70 μm or less, 69 μm or less, 67 μm or less, or 65 μm or less, and in detail, the total sum of thicknesses of the first outer layer and the second outer layer may be in a range of 52 μm to 67 μm.

Further, according to the embodiment of the present disclosure, a ratio of the thickness of the barrier layer to the sum of the thicknesses of the first outer layer and the second outer layer may be in a range of 1: 0.65 to 1:0.9. By way of example, the ratio of the thickness of the barrier layer to the sum of the thicknesses of the first outer layer and the second outer layer may be 1:0.65 or more, 1:0.67 or more, 1:0.69 or more, 1:0.70 or more, 1:0.71 or more, 1:0.73 or more, 1:0.75 or more, 1:0.77 or more, 1:0.78 or more, 1:0.90 or less, 1:0.89 or less, 1:0.87 or less, 1:0.85 or less, 1:0.84 or less, 1:0.83 or less, 1:0.81 or less, or 1:0.80 or less, and in detail, the ratio of the thickness of the barrier layer to the sum of thicknesses of the first outer layer and the second outer layer may be in a range of 1:0.65 to 1:0.84.

The thickness ratio of the barrier layer to the second outer layer, the sum of the thicknesses of the first outer layer and the second outer layer, and the ratio of the thickness of the barrier layer to the sum of the thicknesses of the first outer layer and the second outer layer are intended to simultaneously maintain a tensile strength and elongation at a high level and to lower a thickness retention ratio of the barrier layer after forming to secure the excellent formability, and are intended to control balance between physical properties of the outer layer and the barrier layer. That is, when the thickness range between the barrier layer, the first outer layer, and the second outer layer is satisfied, the thickness retention ratio of the barrier layer may be increased, and the excellent formability may be maintained.

According to the embodiment of the present disclosure, MD elongation and TD elongation of the second outer layer may be in a range of 50% to 300% independently of each other. By way of example, MD elongation and TD elongation

of the second outer layer may be 50% or more, 55% or more, 60% or more, 65% or more, 70% or more, 75% or more, 300% or less, 290% or less, 280% or less, 270% or less, 260% or less, 250% or less, 240% or less, 230% or less, 220% or less, 210% or less, 200% or less, 190% or less, 180% or less, 170% or less, 160% or less, 150% or less, 140% or less, 130% or less, 120% or less, 110% or less, 100% or less, 95% or less, 90% or less, 85% or less, or 80% or less.

Further, according to the embodiment of the present disclosure, the tensile strength of the second outer layer in the MD direction may be in a range of 200 N/15 mm to 300 N/15 mm. By way of example, the tensile strength of the second outer layer in the MD direction may be 200 N/15 mm or more, 205 N/15 mm or more, 210 N/15 mm or more, 213 N/15 mm or more, 215 N/15 mm or more, 220 N/15 mm or more, 225 N/15 mm or more, 230 N/15 mm or more, 235 N/15 mm or more, 240 N/15 mm or more, 245 N/15 mm or more, 250 N/15 mm or more, 255 N/15 mm or more, 300 N/15 mm or less, 295 N/15 mm or less, 290 N/15 mm or less, 285 N/15 mm or less, 280 N/15 mm or less, 276 N/15 mm or less, 275 N/15 mm or less, 270 N/15 mm or less, 269 N/15 mm or less, 265 N/15 mm or less, or 260 N/15 mm or less.

When the ranges of the elongation and the tensile strength of the second outer layer are satisfied, balance of physical properties with the barrier layer may be optimally maintained, and the thickness retention ratio of the barrier layer after forming may be increased.

According to the embodiment of the present disclosure, the thickness retention ratio of the barrier layer according to Equation 2 may be 55% or more.

$$\text{Thickness retention ratio (\%)} = (\text{thickness of the barrier layer after forming}/\text{thickness of the barrier layer before forming}) \times 100 \quad \text{[Equation 2]}$$

In Equation 2,

The thickness of the barrier layer after forming is measured after cutting the pouch film not including a sealing portion, preparing a specimen having a dimension of 266 mm (TD) × 240 mm (MD) × 15 mm (width), adding low-density polyethylene (LDPE) onto both sides of the specimen, pressing the specimen at 0.3 MPa using a test mold having a dimension of 30 mm × 75 mm, and then forming the specimen to a forming depth of 17 mm. In this case, an average value of the thickness of the barrier layer is calculated by measuring each of four corners of a rectangular formed shape six times.

The thickness retention ratio of the barrier layer corresponds to a very important criterion in determining formability of the pouch film. Due to stretching of the barrier layer, contraction may occur even after a forming process to a desired depth, and accordingly, moisture penetration and electrolyte leakage may occur. Accordingly, it is important that the thickness of the barrier layer after forming is maintained at a high level, and by way of example, the thickness retention ratio may be 55% or more, 57% or more, 59% or more, 60% or more, 61% or more, 63% or more, or 65% or more. When the thickness retention ratio of the barrier layer is satisfied, formability of 17 mm or more based on 1 cup may be secured, and formability of 30 mm or more based on 2 cups may be secured. Here, the low-density polyethylene (LDPE) may be a laminated film instead of a CPP film laminated on one surface of the barrier layer to perform a formability test and may also include polyethylene (PE), and a thickness of the low-density polyethylene (LDPE) may be in a range of 40 μm to 60 μm, and preferably may be 50 μm. Further, a frictional coefficient of the LDPE may be in a range of 0.05 to 0.5, and preferably may be 0.1.

According to the embodiment of the present disclosure, the thickness of the pouch film may be in a range of 205 μm to 250 μm. By way of example, the total thickness of the pouch film may be 205 μm or more, 210 μm or more, 212 μm or more, 215 μm or more, 220 μm or more, 222 μm or more, 225 μm or more, 227 μm or more, 250 μm or less, 245 μm or less, 240 μm or less, or 235 μm or less, or 230 μm or less. When the total thickness of the pouch film is excessively thick, balance of physical properties between the tensile strength and the elongation may be biased to one side, and thus it is preferable that the thickness of the pouch film be maintained within the above range.

According to the embodiment of the present disclosure, the first outer layer may include one or more materials selected from the group consisting of polyethylene, polypropylene, polycarbonate, polyethylene terephthalate, polybutylene terephthalate, polytrimethylene terephthalate, polyethylene naphthalate, polyvinyl chloride, an acryl-based polymer, polyacrylonitrile, polyimide, polyamide, cellulose, aramid, nylon, polyester, polyparaphenylene benzobisoxazole, polyarylate, Teflon, and glass fiber. By way of example, the first outer layer may include polyethylene terephthalate.

The sealant layer may be an innermost layer of the pouch film for a lithium secondary battery exterior. That is, the sealant layer may be in direct contact with a battery body (e.g., an electrode, a separator, and/or an electrolyte). Thus, the sealant layer should have excellent electrolyte resistance and excellent insulating properties. To this end, the sealant layer may include at least a polyolefin-based resin. The polyolefin-based resin may have excellent electrolyte resistance and excellent insulating properties, and accordingly, the sealant layer including the polyolefin-based resin may also have excellent electrolyte resistance and excellent insulating properties derived from the polyolefin-based resin.

The polyolefin-based resin may include, for example, a polyolefin derived from an olefin or a derivative thereof, a copolymer thereof, or a blend including at least one of them. For example, the polyolefin-based resin may include one or more selected from the group consisting of polyethylene, polypropylene, polybutylene, a copolymer derived from a

monomer derived from ethylene and/or propylene and a monomer derived from an alpha-olefin, and a blend thereof.

By way of example, a thickness of the sealant layer may be 20 μm or more, 30 μm or more, 40 μm or more, 50 μm or more, 100 μm or less, 90 μm or less, 80 μm or less, 70 μm or less, or 60 μm or less, and when the above numerical range is satisfied, the sealant layer may have excellent electrolyte resistance and insulation properties.

According to the embodiment of the present disclosure, the sealant layer may be configured as a laminate including two or more layers to diversify functions. In detail, the sealant layer may include a first sealant layer disposed on the barrier layer and a second sealant layer disposed on the first sealant layer. Here, the first sealant layer may be a layer that serves to assist adhesion between the barrier layer and the second sealant layer, and at the same time, to further enhance a function as the sealant layer, and the second sealant layer may be a layer constituting the innermost sealant layer of the pouch film and serving to perform sealing, and at the same time, to prevent leakage of a secondary battery, particularly a non-aqueous electrolyte. The first sealant layer may be the EC layer (mainly, an extruded polypropylene layer), and the second sealant layer may be a PP layer resin on a lower side of the first sealant layer (on an inner side with respect to the pouch film), preferably, a CPP layer. In this case, by way of example, a thickness of the CPP layer of the sealant layer may be, for example, 20 μm or more, 30 μm or more, 40 μm or more, 50 μm or more, 80 μm or less, 70 μm or less, or 60 μm or less, and a thickness of the PP layer of the sealant layer may be, for example, 0 μm or more, 10 μm or more, 20 μm or more, 30 μm or more, 60 μm or less, 50 μm or less, or 40 μm or less.

Further, according to the embodiment of the present disclosure, the PP layer of the sealant layer may contain various additives (rubber, an elastomer, a slip agent, or the like) depending on required physical properties.

Pouch-type secondary battery case and secondary battery

The secondary battery of the present disclosure includes the battery body and a pouch-type secondary battery case including the pouch film, and the secondary battery case may include the pouch film of the present disclosure. The battery body is sealed by the pouch-type secondary battery case. By way of example, the secondary battery may be a lithium secondary battery, and in this case, the battery body may include a negative electrode for a lithium secondary battery, a positive electrode for a lithium secondary battery, and an electrolyte.

The positive electrode for a lithium secondary battery may be used without limitation as long as the positive electrode is commonly used as a positive electrode of a lithium secondary battery. For example, the positive electrode for a lithium secondary battery may include a positive electrode active material such as $LiCoO_2$, $LiMnO_2$, $LiFePO_4$, $LiFeO_2$, or $Li(Ni_{0.6}Mn_{0.2}Co_{0.2})O_2$.

The electrolyte may include a lithium salt and a non-aqueous organic solvent. Here, the lithium salt and the non-aqueous organic solvent may be used without limitation as long as the lithium salt and the non-aqueous organic solvent are those commonly used as an electrolyte and an organic solvent of a lithium secondary battery.

The negative electrode for a lithium secondary battery may be used without limitation as long as the negative electrode is commonly used as a negative electrode of a lithium secondary battery. For example, the negative electrode for a lithium secondary battery may include a negative electrode active material such as a carbon-based active material and a silicon-based active material.

The pouch-type secondary battery case may have excellent sealing strength characteristics. Thus, the battery body sealed by the pouch-type secondary battery case may not be exposed to an external environment.

## Method of Manufacturing Pouch Film

Hereinafter, a method of manufacturing a pouch film of the present disclosure will be described. The method of manufacturing a pouch film is not limited to a manufacturing method which will be described below, and the following manufacturing method may be one manufacturing method among various manufacturing methods of pouch films.

The present disclosure provides a method of manufacturing a pouch film, the method including an operation of laminating a sealant film on one surface of a barrier film and an operation of sequentially laminating a second outer layer and a first outer layer on the other surface of the barrier film, wherein the second outer layer includes a nylon-based resin, and the second outer layer is manufactured by a blown method.

The blown method is a method of melting and extruding a polymer, injecting air, and then inflating a film like a balloon and may be mainly used when a high-strength film such as nylon is produced. In detail, the blown method may include operations of extrusion, tube formation, blowing, cooling, flattening, and winding. The extrusion refers to an operation of heating a polymer pellet and then converting the polymer pellet into a molten state through an extruder, and the tube formation refers to an operation of extruding the molten polymer into a cylindrical tube shape through a die. The blowing is an operation of injecting air into a center of a tube and expanding the tube, and in the blowing operation, a thickness of the film may be adjusted. Thereafter, the second outer layer may be manufactured through a cooling operation of cooling the expanded tube, a flattening operation of passing the cooled tube between compression rollers and forming the tube into a film shape, and a winding operation of winding the film into a roll shape.

Further, the blown method may be classified into an upward method and a downward method according to an air injecting direction in the blowing operation. The upward method is advantageous for manufacturing a film having a thickness of 25 μm or less, but it is difficult to increase the thickness to 25 μm or more, and quality control may be difficult due to a cooling uniformity issue. When the thickness is increased, cooling non-uniformity easily occurs, and this affects mechanical properties or quality of the film, and thus increasing and applying a thickness of the nylon for a secondary battery has limitations in a current technology. Further, the downward method is advantageous for manufacturing a film having a thickness of 40 μm or less with the help of gravity, and may relatively stably maintain a thickness of 25 μm to 40 μm. However, as the thickness is excessively increased, cooling efficiency may be decreased, and thus quality issues may occur.

The second outer layer manufactured by the blown method may be elongated together with the barrier layer during forming, and thus formability of the pouch film may be excellent.

When a biaxial stretching method is used in addition to the blown method, a tensile strength and durability may be improved, but flexibility and elongation may be significantly reduced, and thus, low-level formability may be obtained.

Hereinafter, an embodiment of the present disclosure will be described in detail so that those skilled in the art to which the present disclosure pertains may easily implement the present disclosure. However, the present disclosure may be implemented in various different forms and is not limited to the embodiments described herein.

**<Example and Comparative Example>**

Example 1

As a laminate including an outer layer, a barrier layer, and a sealant layer, a laminated film of a polyethylene terephthalate (PET) film (thickness of 12 μm) on an outermost side thereof and a first nylon Ny film (thickness of 25 μm) and a second nylon Ny film (thickness of 25 μm) on an inner side thereof is used as the outer layer. The pouch film is manufactured using aluminum for the barrier layer (thickness of 80 μm) and using an extrusion lamination method for the sealant layer (thickness of 80 μm) and to include the polypropylene EC layer (thickness of 30 μm) and the CPP (thickness of 50 μm). The first nylon laminated film and the second nylon laminated film are manufactured by a blown upward method and are manufactured while adjusting an elongation ratio of the barrier layer and the first nylon film, an extrusion speed, a temperature, and a pressure condition. In this case, a ratio of the thickness of the second outer layer Ny1+Ny2/the thickness of the barrier layer Al is 0.63, a ratio of the thickness of the entire outer layer PET+Ny1+Ny2/the thickness of the barrier layer Al is 0.78, and a ratio of the tensile strength of the barrier layer Al/the tensile strength of the second outer layer Ny1+Ny2 is 1.00.

**Example 2**

As the laminate including the outer layer, the barrier layer, and the sealant layer, a laminated film of a polyethylene terephthalate (PET) film (thickness of 12 μm) on an outermost side thereof and a first nylon Ny film (thickness of 15 μm) and a second nylon Ny film (thickness of 25 μm) on an inner side thereof is used as the outer layer. The pouch film is manufactured using aluminum for the barrier layer (thickness of 80 μm) and using an extrusion lamination method for the sealant layer (thickness of 80 μm) and to include the polypropylene EC layer (thickness of 30 μm) and the CPP (thickness of 50 μm). The first nylon laminated film and the second nylon laminated film are manufactured by the blown upward method and are manufactured while adjusting the elongation ratio of the barrier layer and the first nylon film, the extrusion speed, the temperature, and the pressure condition. In this case, the ratio of the thickness of the second outer layer Ny1+Ny2/the thickness of the barrier layer Al is 0.50, the ratio of the thickness of the entire outer layer PET+Ny1+Ny2/the thickness of the barrier layer Al is 0.65, and the ratio of the tensile strength of the barrier layer Al/the tensile strength of the second outer layer Ny1+Ny2 is 1.17.

**Example 3**

As the laminate including the outer layer, the barrier layer, and the sealant layer, a laminated film of a polyethylene terephthalate (PET) film (thickness of 12 μm) on an outermost side thereof and a first nylon Ny film (thickness of 25 μm) and a second nylon Ny film (thickness of 30 μm) on an inner side thereof is used as the outer layer. The pouch film is manufactured using aluminum for the barrier layer (thickness of 80 μm) and using an extrusion lamination method for the sealant layer (thickness of 80 μm) and to include the polypropylene EC layer (thickness of 30 μm) and the CPP (thickness of 50 μm). The first nylon laminated film and the second nylon laminated film are manufactured by the blown upward method and are manufactured while adjusting the elongation ratio of the barrier layer and the first nylon film, the extrusion speed, the temperature, and the pressure condition. In this case, the ratio of the thickness of the second outer layer Ny1+Ny2/the thickness of the barrier layer Al is 0.69, the ratio of the thickness of the entire outer layer PET+Nyl+Ny2/the

thickness of the barrier layer Al is 0.84, and the ratio of the tensile strength of the barrier layer Al/the tensile strength of the second outer layer Ny1+Ny2 is 0.95.

**Example 4**

As the laminate including the outer layer, the barrier layer, and the sealant layer, the PET film (thickness of 12 μm) on an outermost side thereof and the nylon Ny film (thickness of 40 μm) on an inner side thereof are used as the outer layer. The pouch film is manufactured using aluminum for the barrier layer (thickness of 80 μm) and using an extrusion lamination method for the sealant layer (thickness of 80 μm) and to include the polypropylene EC layer (thickness of 30 μm) and the CPP (thickness of 50 μm). The nylon layer is manufactured by a blown downward method and is manufactured while adjusting an elongation ratio of the barrier layer and the nylon film, an extrusion speed, a temperature, and a pressure condition. In this case, a ratio of the thickness of the second outer layer Ny/the thickness of the barrier layer Al is 0.50, a ratio of the thickness of the entire outer layer PET+Ny/the thickness of the barrier layer Al is 0.65, and a ratio of the tensile strength of the barrier layer Al/the tensile strength of the second outer layer Ny is 0.99.

**Comparative example 1**

The pouch film is manufactured in the same manner as in Example 1 except that the nylon (Ny) film (thickness of 25 μm) is used and aluminum is used for the barrier layer (thickness of 60 μm) instead of using the laminated film of the first nylon Ny film (thickness of 25 μm) and the second nylon Ny film (thickness of 25 μm) and using aluminum for the barrier layer (thickness of 80 μm).

**Comparative example 2**

The pouch film is manufactured in the same manner as in Example 1 except that the nylon (Ny) film (thickness of 25 μm) is used instead of using the laminated film of the first nylon (Ny) film (thickness of 25 μm) and the second nylon (Ny) film (thickness of 25 μm).

Comparative example 3

The pouch film is manufactured in the same manner as in Example 1 except that the nylon (Ny) film (thickness of 30 μm) is used instead of using the laminated film of the first nylon (Ny) film (thickness of 25 μm) and the second nylon (Ny) film (thickness of 25 μm).

**Experimental Example**

(1) Evaluation of tensile strength and elongation

In the tensile strength, according to the examples and the comparative examples, after the barrier layer and the second outer layer of the pouch film were peeled off to prepare a specimen having a width of 15 mm, the specimen was fixed between the two jigs of the tensile tester UTM at room temperature (with an initial jig gap of 50 mm), and then while the specimen was pulled in the MD direction at a measurement speed of 50 mm/min, the stroke (mm) and the strength (N) of the specimen were measured. The measured tensile strength value is represented in Table 1 below.

Further, the elongation in the present disclosure is measured in the following method. Two parallel lines are drawn at a central portion of the specimen, and an initial spacing between the lines is set to 30 mm. Thereafter, after the specimen is mounted on a tensile tester to perform a tensile strength test, an actual length between the lines elongated by tension is measured.

The elongation is calculated according to the following Equation 1, and the elongation is represented in Table 1.

[Equation 1]

$$\text{Elongation} = ((\text{elongated length} - 30\text{ mm})/30\text{ mm})\text{x}100,$$

In Equation 1,

The elongated length is a final distance between the two lines after the tensile test.

Thereafter, in a graph derived from the measured value, an X axis is a stroke (mm) and an Y axis is a tensile strength (N). The tensile strengths of the barrier layer and the second outer layer when the stroke is 5 mm are measured, and a ratio of the tensile strength of the barrier layer Al/the tensile strength of the second outer layer Ny1+Ny2 is represented in Table 1 below.

**(2) Thickness retention evaluation after forming**

The thickness of the barrier layer after forming was measured after cutting the pouch film according to the examples and the comparative examples not to include the sealing portion, preparing the specimen having a dimension of 266 mm (TD) × 240 mm (MD) × 15 mm (width), adding the LDPE onto both sides of the specimen, pressing the specimen at 0.3 MPa using the test mold having a dimension of 30 mm × 75 mm, and then forming the specimen to a forming depth of 17 mm. In this case, the average value of the thickness of the barrier layer is calculated by measuring each of four corners of a rectangular formed shape six times. Thereafter, the measured remaining thickness and the measured thickness retention ratio of the barrier layer after forming are represented in Table 1 below.

(3) Maximum forming measurement evaluation

Further, with respect to the pouch film manufactured in the examples and comparative examples, 1 cup forming was evaluated, and an average value of a maximum forming length was measured using a vernier caliper.

[Table 1]

<table>
<tr><th colspan="2">Classification</th><th>Example 1</th><th>Example 2</th><th>Example 3</th><th>Example 4</th><th>Comparative example 1</th><th>Comparative example 2</th><th>Comparative example 3</th></tr>
<tr><td>Thickness (μm) of first outer layer</td><td>PET</td><td>12</td><td>12</td><td>12</td><td>12</td><td>12</td><td>12</td><td>12</td></tr>
<tr><td rowspan="2">Thickness (μm) of second outer layer</td><td>Ny2</td><td>25</td><td>25</td><td>30</td><td rowspan="2">40</td><td rowspan="2">25</td><td rowspan="2">25</td><td rowspan="2">30</td></tr>
<tr><td>Ny1</td><td>25</td><td>15</td><td>25</td></tr>
<tr><td>Thickness (μm) of barrier layer</td><td>Al</td><td>80</td><td>80</td><td>80</td><td>80</td><td>60</td><td>80</td><td>80</td></tr>
<tr><td rowspan="2">Thickness (μm) of sealant layer</td><td>PP</td><td>30</td><td>30</td><td>30</td><td>30</td><td>30</td><td>30</td><td>30</td></tr>
<tr><td>CPP</td><td>50</td><td>50</td><td>50</td><td>50</td><td>50</td><td>50</td><td>50</td></tr>
<tr><td colspan="2">Total thickness (μm) of pouch film</td><td>222</td><td>212</td><td>227</td><td>212</td><td>177</td><td>197</td><td>202</td></tr>
<tr><td colspan="2">Total thickness (μm) of second outer layer (Ny1+Ny2)</td><td>50</td><td>40</td><td>55</td><td>40</td><td>25</td><td>25</td><td>30</td></tr>
<tr><td colspan="2">Total thickness (μm) of outer layer PET+Ny1+Ny2</td><td>62</td><td>52</td><td>67</td><td>52</td><td>37</td><td>37</td><td>42</td></tr>
<tr><td colspan="2">Thickness of second outer layer Ny1+Ny2/thickness of barrier layer Al</td><td>0.63</td><td>0.50</td><td>0.69</td><td>0.50</td><td>0.42</td><td>0.31</td><td>0.38</td></tr>
<tr><td colspan="2">Total thickness of outer layer PET+Ny1+Ny2/thickne ss of barrier layer Al</td><td>0.78</td><td>0.65</td><td>0.84</td><td>0.65</td><td>0.62</td><td>0.46</td><td>0.53</td></tr>
<tr><td colspan="2">Elongation (MD) of second outer layer</td><td>78</td><td>73</td><td>69</td><td>72</td><td>63</td><td>63</td><td>59</td></tr>
</table>

(continued)

| Classification | Example 1 | Example 2 | Example 3 | Example 4 | Comparative example 1 | Comparative example 2 | Comparative example 3 |
|---|---|---|---|---|---|---|---|
| Elongation (TD) of second outer layer | 69 | 64 | 62 | 63 | 59 | 59 | 55 |
| Tensile strength (N/15 mm) of second outer layer MD (up)/TD (down) | 269<br>270 | 213<br>229 | 276<br>290 | 210<br>225 | 148<br>150 | 152<br>154 | 173<br>173 |
| Tensile strength of barrier layer Al/ Tensile strength of second outer layer Ny1+Ny2 | 1.00 | 1.17 | 0.95 | 0.99 | 1.25 | 1.67 | 1.54 |
| Thickness (μm) when 1 cup is formed | 18.0 | 17.5 | 19.0 | 17.5 | 13.0 | 15.0 | 15.5 |
| Residual thickness (μm) of barrier layer after forming | 48 | 44 | 50 | 44 | 30 | 36 | 35 |
| Thickness retention ratio (%) of barrier layer after forming | 60.0 | 55.0 | 62.5 | 55.0 | 50.0 | 45.0 | 43.8 |

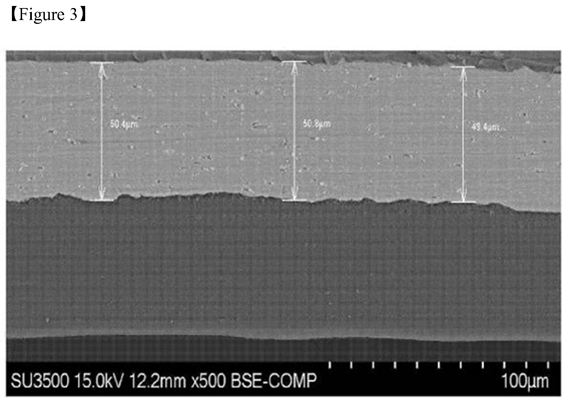

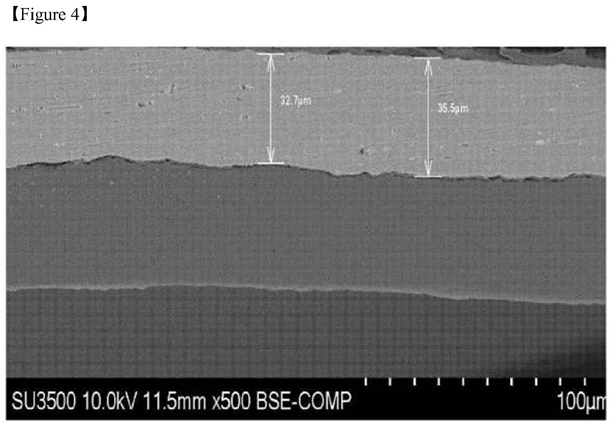

Referring to Table 1 and FIGS. 3, and 4, in the case of Examples 1 to 4 in which the thickness of the second outer layer and the ratio of the tensile strength of the second outer layer to the tensile strength of the barrier layer according to the present disclosure are satisfied, it may be identified that a thickness at 1 cup forming is greater than that of the Comparative examples, the thickness retention ratio of the barrier layer after forming is high, and thus excellent formability is achieved.

Further, even in the case of Example 4, since a single-layer film rather than a laminated film is used as the second outer layer, it may be identified that formability equivalent to that of Examples 1 to 3 is achieved.

On the other hand, in the case of Comparative examples 1 to 3 in which the thickness of the second outer layer and the ratio of the tensile strength are not satisfied, it may be identified that the thickness at 1 cup forming is smaller than that of Examples, the thickness retention ratio after forming is also low, and thus inferior formability is achieved compared to Examples.

(4) Evaluation of thickness retention after forming according to method of manufacturing nylon

As described below, after the nylon laminated film (layer) was formed using the biaxial stretching method rather than the blown method, the pouch film including the same was manufactured. For Example 1 and the following Comparative examples a and b, measurement was performed in the same manner as the thickness retention evaluation of (2) after forming. The remaining thickness and the thickness retention ratio of the barrier layer after forming are represented in Table 2 below.

<Comparative example a>

The pouch film was manufactured in the same manner as in Example 1 except that the nylon laminated film was manufactured using the biaxial stretching method rather than the blown method.

<Comparative example b>

The pouch film was manufactured in the same manner as in Example 1 except that the nylon (Ny) film (thickness of 45 μm) is used instead of manufacturing the nylon laminated film using the biaxial stretching method rather than the blown method and using the laminated film of the first nylon (Ny) film (thickness of 25 μm) and the second nylon (Ny) film (thickness of 25 μm).

[Table 2]

| Classification | | Example 1 | Example 4 | Comparative example a | Comparative example b |
|---|---|---|---|---|---|
| Thickness (μm) of first outer layer | PET | 12 | 12 | 12 | 12 |

(continued)

| Classification | | Example 1 | Example 4 | Comparative example a | Comparative example b |
|---|---|---|---|---|---|
| Thickness (μm) of second outer layer | Ny2 | 25 | 40 | 25 | 45 |
| | Ny1 | 25 | | 25 | |
| Thickness (μm) of barrier layer | Al | 80 | 80 | 80 | 80 |
| Thickness (μm) of sealant layer | PP | 30 | 30 | 30 | 30 |
| | CPP | 50 | 50 | 50 | 50 |
| Method of manufacturing second outer layer | | Blown up-ward method | Blown down-ward method | Biaxial stretch-ing method | Biaxial stretch-ing method |
| Residual thickness (μm) of barrier layer after forming | | 48 | 44 | 38 | 37 |
| Thickness retention ratio (%) of barrier layer after forming | | 60.0 | 55.0 | 47.5 | 46.25 |

Referring to Table 2, it may be identified that Examples 1 and 4 which are manufactured by the blown upward method and the blown downward method according to the present disclosure exhibit significantly excellent formability compared to Comparative examples a and b manufactured by the biaxial stretching method according to the related art.

**Acknowledgement**

The present disclosure is a result obtained through support of the following project.

Project Number: 20022450
Ministry Name: Ministry of Trade, Industry and Energy
Name of project management (professional) institution: Korea Planning & Evaluation Institute of Industrial Technology
Research project name: Materials and Components Technology Development (Leading Company)
Research project name: Development of next-Generation secondary battery pouch capable of implementing high adhesion strength (60 °C) two or more times
Contribution rate: 1/1
Project implementation organization name: Youlchon Chemical Co., Ltd.
Research period: January 1, 2024 to December 31, 2024

**Claims**

**1.** A pouch film comprising:

a sealant layer, a barrier layer, a second outer layer, and a first outer layer which are sequentially laminated,
wherein the second outer layer includes a nylon-based resin,
wherein a thickness of the second outer layer is in a range of 35 μm to 60 μm, and
wherein a ratio of a tensile strength of the barrier layer to a tensile strength of the second outer layer, which is measured according to a measurement condition, satisfies Equation 1,

$$0.9 \leq \text{tensile strength of barrier layer/tensile strength of second outer layer} \leq 1.2, \qquad \text{[Equation 1]},$$

and
[Measurement condition]
after the barrier layer and the second outer layer of the pouch film are peeled off to prepare respective specimen having a width of 15 mm, the specimen is fixed between two jigs of a tensile tester (UTM) at room temperature (with an initial jig gap of 50 mm), and then while the specimen is pulled in an MD direction at a measurement speed of 50 mm/min, a stroke (mm) and a strength (N) of the specimen are measured, and in a graph derived from the measured values, an X axis is a stroke (mm), a Y axis is a tensile strength(N), and tensile strengths of the barrier

layer and the second outer layer are measured when the stroke is 5 mm.

2. The pouch film of claim 1, wherein a ratio of a thickness of the barrier layer to the thickness of the second outer layer is in a range of 1:0.5 to 1:0.7.

3. The pouch film of claim 1, wherein a thickness of the barrier layer is in a range of 40 μm to 100 μm.

4. The pouch film of claim 1, wherein a sum of a thickness of the first outer layer and the thickness of the second outer layer is in a range of 40 μm to 100 μm.

5. The pouch film of claim 1, wherein a ratio of a thickness of the barrier layer to a sum of a thickness of the first outer layer and the thickness of the second outer layer is in a range of 1:0.65 to 1:0.9.

6. The pouch film of claim 1, wherein MD elongation and TD elongation of the second outer layer are in a range of 50% to 300% independently of each other.

7. The pouch film of claim 1, wherein the tensile strength of the second outer layer in the MD direction is in a range of 200 N/15 mm to 300 N/15 mm.

8. The pouch film of claim 1, wherein a thickness retention ratio of the barrier layer according to Equation 2 is 55% or more,

Thickness retention ratio (%) = (thickness of the barrier layer after forming/thickness of the barrier layer before forming) × 100, [Equation 2],

and in Equation 2,
the thickness of the barrier layer after forming is measured after cutting the pouch film not including a sealing portion, preparing a specimen having a dimension of 266 mm (TD) × 240 mm (MD) × 15 mm (width), adding low-density polyethylene (LDPE) onto both sides of the specimen, pressing the specimen at 0.3 MPa using a test mold having a dimension of 30 mm × 75 mm, and then forming the specimen to a forming depth of 17 mm, and in this case, an average value of the thickness of the barrier layer is calculated by measuring each of four corners of a rectangular formed shape six times.

9. The pouch film of claim 1, wherein the second outer layer includes a single layer or two or more laminated layers.

10. The pouch film of claim 1, wherein a thickness of the pouch film is in a range of 205 μm to 250 μm.

11. The pouch film of claim 1, wherein the first outer layer includes one or more materials selected from the group consisting of polyethylene, polypropylene, polycarbonate, polyethylene terephthalate, polybutylene terephthalate, polytrimethylene terephthalate, polyethylene naphthalate, polyvinyl chloride, an acryl-based polymer, polyacrylonitrile, polyimide, polyamide, cellulose, aramid, nylon, polyester, polyparaphenylene benzobisoxazole, polyarylate, Teflon, and glass fiber.

12. The pouch film of claim 1, wherein a thickness of the first outer layer is in a range of 5 μm to 40 μm.

13. The pouch film of claim 1, wherein the barrier layer includes one or more materials selected from the group consisting of aluminum, stainless steel, copper, titanium, and alloys thereof.

14. A pouch-type battery case comprising the pouch film of claim 1.

15. A secondary battery comprising:

an electrode assembly in which a positive electrode, a separator, and a negative electrode are laminated and formed; and
a pouch-type battery case of claim 14, the electrode assembly being accommodated in the pouch-type battery case.

16. A method of manufacturing a pouch film, the method comprising:

laminating a sealant film on one surface of a barrier film; and
sequentially laminating a second outer layer and a first outer layer on the other surface of the barrier film,
wherein the second outer layer includes a nylon-based resin, and
wherein the second outer layer is manufactured by a blown method.

【Figure 1】

| FIRST OUTER LAYER (PET) |
| --- |
| SECOND OUTER LAYER (NY) |
| BARRIER LAYER (AL) |
| SEALANT LAYER (EC LAYER) |
| SEALANT LAYER (CPP LAYER) |

【Figure 2】

Ny55
Ny50
Ny40
Ny30
Ny25
Al80
Al60
TENSILE STRENGTH (N)
STROKE (MM)
0
20
40
60
80
100
120
0
5
10
15
20

【Figure 3】

50.4μm
50.8μm
49.4μm
SU3500 15.0kV 12.2mm x500 BSE-COMP
100μm

【Figure 4】

32.7µm
35.5µm
SU3500 10.0kV 11.5mm x500 BSE-COMP
100µm

## INTERNATIONAL SEARCH REPORT

International application No.
**PCT/KR2024/016319**

**A. CLASSIFICATION OF SUBJECT MATTER**

**H01M 50/133**(2021.01)i; **H01M 50/126**(2021.01)i; **H01M 50/119**(2021.01)i; **H01M 50/121**(2021.01)i; **H01M 50/105**(2021.01)i; **H01M 10/052**(2010.01)i; **B32B 15/085**(2006.01)i; **B32B 15/088**(2006.01)i; **B32B 15/09**(2006.01)i; **B32B 27/08**(2006.01)i

According to International Patent Classification (IPC) or to both national classification and IPC

**B. FIELDS SEARCHED**

Minimum documentation searched (classification system followed by classification symbols)

H01M 50/133(2021.01); C08K 3/00(2006.01); H01M 2/02(2006.01); H01M 50/105(2021.01); H01M 50/124(2021.01); H01M 50/129(2021.01); H01M 50/46(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 파우치 필름(pouch film), 실란트층(sealant layer), 배리어층(barrier layer), 나일론계 수지(nylon resin)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0145964 A (LG ENERGY SOLUTION, LTD.) 18 October 2023 (2023-10-18)<br>See paragraphs [0027]-[0080]; example 1; claims 15-16; and figure 2. | 1-16 |
| A | US 2023-0089546 A1 (LG ENERGY SOLUTION, LTD.) 23 March 2023 (2023-03-23)<br>See entire document. | 1-16 |
| A | KR 10-2391814 B1 (DONGWOO FINE-CHEM CO., LTD.) 29 April 2022 (2022-04-29)<br>See entire document. | 1-16 |
| A | KR 10-2016-0073837 A (YOULCHON CHEMICAL CO., LTD.) 27 June 2016 (2016-06-27)<br>See entire document. | 1-16 |
| A | KR 10-2017-0002077 A (KOLON INDUSTRIES, INC.) 06 January 2017 (2017-01-06)<br>See entire document. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 January 2025** | **30 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/016319**

| Patent document cited in search report | Publication date (day/month/year) | Patent family member(s) | Publication date (day/month/year) |
|---|---|---|---|
| KR 10-2023-0145964 A | 18 October 2023 | CN 113782878 A | 10 December 2021 |
| | | EP 4135105 A1 | 15 February 2023 |
| | | JP 2023-526609 A | 22 June 2023 |
| | | JP 2024-026624 A | 28 February 2024 |
| | | JP 7416979 B2 | 17 January 2024 |
| | | KR 10-2021-0152969 A | 16 December 2021 |
| | | KR 10-2611432 B1 | 08 December 2023 |
| | | US 2023-0207931 A1 | 29 June 2023 |
| | | WO 2021-251736 A1 | 16 December 2021 |
| US 2023-0089546 A1 | 23 March 2023 | CN 113540623 A | 22 October 2021 |
| | | CN 115244767 A | 25 October 2022 |
| | | EP 4095991 A1 | 30 November 2022 |
| | | EP 4095991 A4 | 26 July 2023 |
| | | EP 4095991 B1 | 11 December 2024 |
| | | JP 2023-518998 A | 09 May 2023 |
| | | JP 2024-125408 A | 18 September 2024 |
| | | JP 7516545 B2 | 16 July 2024 |
| | | KR 10-2021-0127636 A | 22 October 2021 |
| | | KR 10-2551089 B1 | 05 July 2023 |
| | | WO 2021-210908 A1 | 21 October 2021 |
| KR 10-2391814 B1 | 29 April 2022 | None | |
| KR 10-2016-0073837 A | 27 June 2016 | KR 10-1712990 B1 | 07 March 2017 |
| KR 10-2017-0002077 A | 06 January 2017 | KR 10-2275884 B1 | 08 July 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230143316